# EUROPÄISCHE PATENTSCHRIFT

(11) **EP 2 678 656 B1**
(45) Veröffentlichungstag und Bekanntmachung des Hinweises auf die Patenterteilung: **01.04.2015**
(21) Anmeldenummer: 12799071.1
(22) Anmeldetag: 06.12.2012
(51) Int. Cl.: G01N 1/06

(54) **MIKROTOM**
MICROTOME
MICROTOME

(30) Priorität: 19.12.2011 DE 102011121366
(43) Veröffentlichungstag der Anmeldung: 01.01.2014
(73) Patentinhaber: Microm International GmbH, 69190 Walldorf (DE)
(72) Erfinder: TEPPKE, Dieter, 68723 Schwetzingen (DE)
(74) Vertreter: Lasch, Hartmut
(86) Internationale Anmeldenummer: PCT/EP2012/005043
(87) Internationale Veröffentlichungsnummer: WO 2013/091786

(56) Entgegenhaltungen:
- EP-A1- 1 094 310
- US-A- 4 700 600
- US-A- 5 099 735
- US-A- 5 740 708
- US-A1- 2009 181 457
- US-A1- 2009 199 716
- US-A1- 2010 043 612

## Beschreibung

Die Erfindung betrifft ein Mikrotom mit einem Klingenhalter, an dem eine Klinge gelagert ist, einer Schnittstrecker-Vorrichtung, mittels der ein mittels der Klinge erzeugtes Schnittpräparat abstützbar ist, und einer Saugvorrichtung, mittels der das Schnittpräparat ansaugbar und abführbar ist, wobei die Saugvorrichtung eine Düse mit einem verstellbar gelagerten Düsenkörper und einem Saugkanal aufweist.

Ein Mikrotom ist ein Schneidegerät, mit dem sich von einem Körper, beispielsweise biologischem Gewebe, sehr dünne Schnittpräparate abschneiden lassen, die dann untersucht werden. Neben den Anwendungen in der Medizin und Biologie werden Mikrotome auch zur Untersuchung von Kunststoffen eingesetzt.

Ein Schnittpräparat hat üblicherweise eine Dicke von 10⁻⁴m bis 10⁻⁷m. Aufgrund dieser geringen Dicke neigen die Schnittpräparate dazu, sich während des Schnittvorgangs zu verformen und insbesondere sich zu wellen oder sogar zu verklumpen. Um dies zu verhindern oder zumindest zu erschweren, ist eine sogenannte Schnittstrecker-Vorrichtung bekannt, die üblicherweise oberhalb der Klinge angeordnet ist und mit dieser einen spaltförmigen Durchlass bildet, durch den das Schnittpräparat hindurchgeführt wird, wobei auf das Schnittpräparat eine geringe Kraft ausgeübt wird, die es in seiner Form stabilisieren soll. Eine entsprechende Schnittstrecker-Vorrichtung ist in verschiedenen Ausgestaltungen bekannt.

Wenn sich das Schnittpräparat trotzt der Verwendung einer Schnittstrecker-Vorrichtung verformt haben sollte, ist es für die weitere Untersuchung üblicherweise nicht mehr geeignet und muss abgeführt bzw. entsorgt werden. Es ist bekannt, zu diesem Zweck eine Saugvorrichtung einzusetzen, die eine Düse mit einem verstellbar gelagerten Düsenkörper und einen Saugkanal aufweist, über den die Düse an eine Unterdruckquelle angeschlossen ist. Der Düsenkörper und somit die Düse sind verstellbar gelagert und können in eine Saugposition gebracht werden, in der eine Düsenöffnung nahe der Klinge angeordnet ist, um ein unbrauchbares Schnittpräparat anzusaugen. Die durch die Saugvorrichtung erzeugbare Saugkraft kann darüber hinaus auch zur Unterstützung der Schnittstreckung eingesetzt werden. Zu Reinigungszwecken ist es möglich, den Düsenkörper in eine Nicht-Funktionsstellung zu bringen, in der die Düse zur Reinigung gut zugänglich ist.

Auch die Schnittstrecker-Vorrichtung ist an einem verstellbaren Träger gehalten und kann zwischen einer Funktionsstellung, in der sie zusammen mit der Klinge auf das Schnittpräparat einwirkt, und eine Nicht-Funktionsstellung verstellt werden, in der die Schnittstrecker-Vorrichtung gereinigt werden kann.

Da der Bauraum für die verstellbare Lagerung einerseits der Schnittsstrecker-Vorrichtung und andererseits des Düsenkörpers stark begrenzt ist, ist die verstellbare Lagerung für diese beiden Baueinheiten konstruktiv aufwändig und kostenmäßig ungünstig.

US 5740708 A offenbart ein Mikrotom mit einem Klingenhalter, einer Schnittstrecker-Vorrichtung und einer Saugvorrichtung.

Der Erfindung liegt die Aufgabe zugrunde, ein Mikrotom der genannten Art zu schaffen, bei dem in konstruktiv einfacher Weise eine Verstellung des Düsenkörpers und der Schnittstrecker-Vorrichtung verwirklicht ist.

Diese Aufgabe wird erfindungsgemäß durch ein Mikrotom mit den Merkmalen des Anspruchs 1 gelöst. Dabei ist vorgesehen, dass die Schnittstrecker-Vorrichtung an dem Düsenkörper gelagert und zusammen mit diesem verstellbar ist.

Erfindungsgemäß wird von der Grundüberlegung ausgegangen, für die Schnittstrecker-Vorrichtung und den Düsenkörper nicht jeweils eine eigene Verstellvorrichtung vorzusehen, sondern die Schnittstrecker-Vorrichtung an dem Düsenkörper mittelbar oder unmittelbar zu lagern. Da der Düsenkörper verstellbar und insbesondere um ein Schwenklager schwenkbar gelagert ist, wird auch die Schnittstrecker-Vorrichtung verstellt und von der Klinge entfernt, wenn der Düsenkörper verstellt wird. Auf diese Weise ist nur eine gemeinsame Verstellvorrichtung notwendig, wodurch der konstruktive Aufbau erleichtert ist. Darüber hinaus kann der beim Mikrotom stark begrenzte Bauraum besser ausgenutzt werden.

In bevorzugter Ausgestaltung der Erfindung ist vorgesehen, dass der Düsenkörper zusammen mit der Schnittstrecker-Vorrichtung an einem Schwenklager schwenkbar gelagert ist. Dabei kann in Weiterbildung der Erfindung vorgesehen sein, dass der Saugkanal durch das Schwenklager verläuft, wodurch für den Saugkanal nur ein geringer Bauraum notwendig ist. Das Schwenklager kann eine Aufnahme beispielsweise in Form einer kreiszylindrischen Bohrung besitzen, in die ein im Querschnitt kreiszylindrisches Rohrteil vorzugsweise unter enger Passung drehbar eingesetzt ist. Der Düsenkörper kann an dem Rohrteil gehalten sein und mit diesem in der Aufnahmebohrung schwenken.

Die Düse besitzt eine Ansaugöffnung, die nahe der Schneide und insbesondere versetzt zu deren Schneidkante angeordnet ist und die die Mündung des Saugkanals darstellt. Der Saugkanal kann dabei zumindest abschnittsweise in dem Düsenkörper angeordnet sein und mit dem Innenraum des Rohrteils insbesondere über einen Durchlass in der Wandung des Rohrteils in strömungstechnischer Verbindung stehen. In der Bohrung bzw. der Aufnahme kann mittels eines Unterdruckerzeugers ein Unterdruck erzeugt werden, der dann auch in dem Innenraum des Rohrteils sowie in dem im Düsenkörper ausgebildeten Abschnitt des Saugkanals und somit an der Ansaugöffnung des Düsenkörpers wirksam ist.

Um den Düsenkörper und die Schnittstrecker-Vorrichtung in einfach Weise reinigen zu können, kann in Weiterbildung der Erfindung vorgesehen sein, dass das Rohrteil aus der Ausnahme entnehmbar ist. Somit kann das Rohrteil mit dem Düsenkörper und der Schnittstrecker-Vorrichtung entnommen und an einem Reinigungsplatz gereinigt werden. Die Entnahme des Rohrteils aus der Aufnahme erfolgt in einfacher Weise dadurch, dass das Rohrteil in seiner Längsrichtung aus der Aufnahme herausgezogen und nach der Reinigung wieder entsprechend eingesteckt wird. Eine Entnahme des Rohrteils mit dem Düsenkörper und der Schnittstrecker-Vorrichtung ist auch dann sinnvoll, wenn der Benutzer während des Schneidvorgangs unmittelbaren Zugriff auf das Schnittpräparat benötigt, wobei die genannten Bauteile im Weg wären. Auf diese Weise ist die Handhabung vereinfacht.

In bevorzugter Ausgestaltung der Erfindung ist vorgesehen, dass die Schnittstrecker-Vorrichtung auf der der Klinge abgewandten Seite des Düsenkörpers angeordnet ist. Wenn sich die Schnittstrecker-Vorrichtung in ihrer Funktionsstellung befindet, ist sie um ein geringes Maß oberhalb der Schneidkante der Klinge angeordnet. Der Düsenkörper mit seiner Ansaugöffnung befindet sich dabei zwischen der Klinge und der Schnittstrecker-Vorrichtung, so dass zuverlässig sicher gestellt ist, dass ein unbrauchbares Schnittpräparat bei Bedarf aufgesaugt werden kann.

Wenn das Mikrotom nicht benutzt wird, muss die Klinge abgedeckt werden, um eine Verletzung von Personen zu verhindern. Zu diesem Zweck ist es bekannt, auf die Klinge eine schuh- oder hülsenförmige Abdeckung, den sogenannten Fingerschutz, aufzusetzen. Um das Mikrotom in Betrieb zu nehmen, muss der Fingerschutz zunächst abgenommen werden, wobei die Gefahr besteht, dass er verloren geht, da er als loses Einzelteil vorliegt. Erfindungsgemäß kann vorgesehen sein, dass der Fingerschutz in verstellbarer Weise an der Schnittstrecker-Vorrichtung gelagert ist. Der Benutzer kann den Fingerschutz zwischen einer Schutzposition, in der er die Klinge zumindest teilweise abdeckt und den Benutzer schützt, und einer Freigabeposition verstellen, in der die Klinge freiliegt und das gewünschte Schnittpräparat schneiden kann. Die Verstellung des Fingerschutzes kann durch eine lineare oder gekrümmte Verstellbewegung erfolgen, vorzugsweise ist vorgesehen, dass der Fingerschutz schwenkbar an der Schnittstrecker-Vorrichtung gelagert ist. Bei dem Fingerschutz kann es sich um einen schwenkbaren Bügel handeln, der einerseits eine hohe Stabilität besitzt und andererseits die Klinge sicher abdecken kann. In Weiterbildung der Erfindung kann an dem Fingerschutz ein Griffteil ausgebildet sein, an dem der Benutzer den Fingerschutz und damit die Schnittstrecker-Vorrichtung und den Düsenkörper ergreifen und um das Schwenklager von der Klinge wegschwenken sowie aus dem Schwenklager herausziehen kann.

Weitere Einzelheiten und Merkmale der Erfindung sind aus der folgenden Beschreibung eines Ausführungsbeispiels unter Bezugnahme auf die Zeichnung ersichtlich. Es zeigen:
- Fig. 1: Eine schematische, teilweise geschnitten dargestellte Seitenansicht der erfindungswesentlichen Bauteile eines Mikrotoms und
- Fig. 2: eine Figur 1 entsprechende Darstellung in geschwenkter Position des Düsenkörpers.

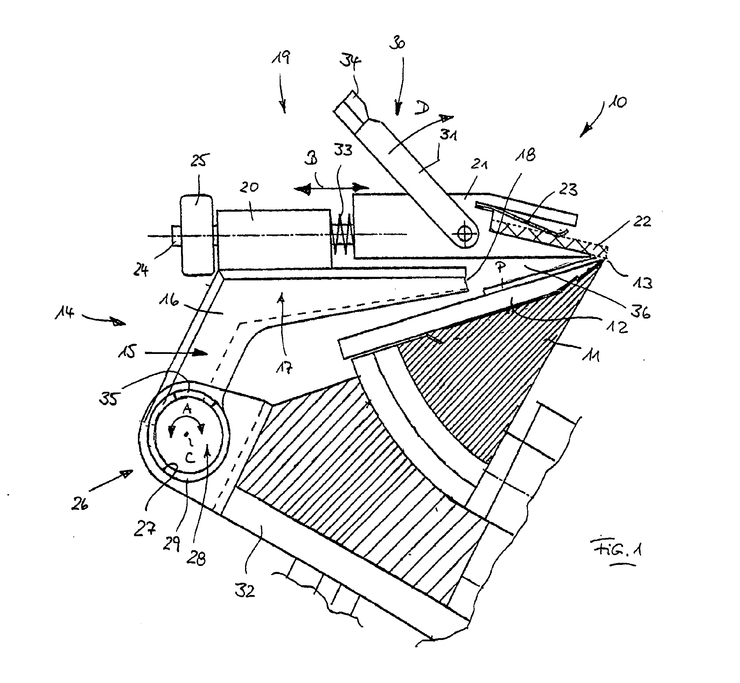

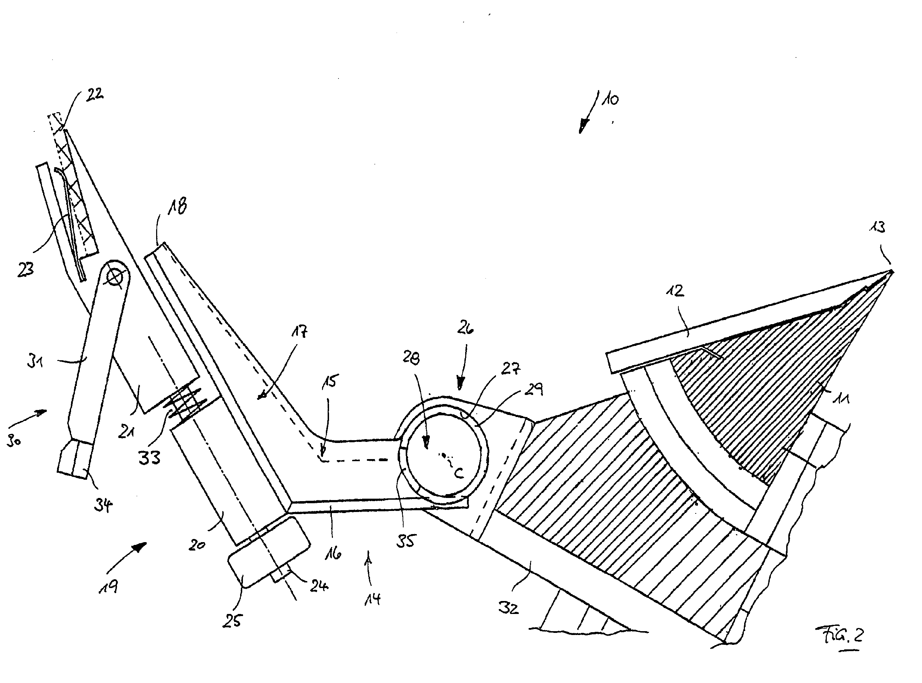

Ein in den Figuren 1 und 2 dargestelltes Mikrotom 10 besitzt ein maschinenfestes Lagerteil 32, an dem ein Klingenhalter 11 in üblicher Weise verstellbar angebracht ist, der eine Klinge 12 mit einer Schneidkante 13 trägt.

An dem Lagerteil 32 ist eine Aufnahme 27 in Form eine Bohrung ausgebildet, die mit einer nicht dargestellten Unterdruckquelle verbunden und Teil einer Saugvorrichtung 14 ist. In die Aufnahme 27 ist ein Rohrteil 29 mit kreisförmigem Querschnitt zur Bildung eines Schwenklagers 26 unter enger Passung so eingesetzt, dass das Rohrteil 29 in der Aufnahme 27 um eine Schwenkachse C gedreht bzw. geschwenkt werden kann, wie es durch den Doppelpfeil A angedeutet ist. Das Rohrteil 29 ist an seinem außenliegenden stirnseitigen Ende abgedichtet, so dass der Unterdruck auch in einem Innenraum 28 des Rohrteils 29 wirksam ist.

Das Rohrteil 29 ist mit einer Saugdüse 15 verbunden. Die Saugdüse 15 umfasst einen Düsenkörper 16, der im Inneren einen Saugkanal 17 besitzt, der an seinem einen Ende über einen Durchlass 35 mit dem Innenraum 28 des Rohrteils 29 in Verbindung steht und an seinem entgegengesetzten Ende an einer Ansaugöffnung 18 nahe oberhalb der Klinge 12 und versetzt zu deren Schneidante 13 mündet.

Auf der der Klinge 12 abgewandten Seite des Düsenkörpers 16 ist an diesem eine Schnittstrecker-Vorrichtung 19 befestigt. Diese besitzt ein fest mit dem Düsenkörper 16 verbundenes Grundteil 20, an dem ein Halteteil 21 mittels eines Führungsstiftes 24 verschieblich gelagert ist, wie es durch den Doppelpfeil B angedeutet ist. Zwischen dem Grundteil 20 und dem Halteteil 21 ist eine Feder 33 angeordnet, die die Position des Halteteils 21 relativ zu dem Grundteil 20 sichert. Die Verstellung des Halteteils 21 relativ zu dem Grundteil 20 erfolgt in üblicher Weise mittels eines Einstellrades 25.

Das Halteteil 21 besitzt an seinem vorderen, der Klinge 12 bzw. deren Schneidkante 13 zugewandten Ende einen Klemmbügel 23, mit dem ein sogenanntes Schnittstreckerglas 22 auswechselbar gelagert ist. Das Schnittstreckerglas 22 ist so ausgerichtet, dass sein vorderes Ende mit der Schneidkante 13 der Klinge 12 einen engen Spalt bildet, durch den ein mit der Klinge 12 abgeschnittenes Schnittpräparat P oberseitig beaufschlagt und gestreckt werden kann.

Zwischen der Unterseite des Halteteils 21 bzw. dem Schnittstreckerglas 22 und der Oberseite der Klinge 12 ist ein spaltförmiger Zwischenraum 36 gebildet, in dem die Ansaugöffnung 18 des Düsenkörpers 16 mündet.

An dem Halteteil 21 ist ein sogenannter Fingerschutz 30 vorgesehen, der von einem schwenkbar gelagerten Bügel 31 gebildet ist. Figur 1 zeigt den Bügel 31 in seiner zurückgeschwenkten Nicht-Funktionsstellung. Aus dieser kann er in Richtung des Pfeils D so geschwenkt werden, dass er sich über die Schneidkante 13 der Klinge 12 und gegebenenfalls auch über das unmittelbar darüber angeordnete vordere Ende des Schnittstreckerglases 22 legt und diese abdeckt.

Zusätzlich ist an dem Bügel 31 ein Griffteil 34 ausgebildet. Dies dient einerseits dazu, dass ein Benutzer den Bügel 31 an dem Griffteil 34 erfassen und in seine die Schneidkante 13 abdeckende Funktionsstellung schwenken kann. Die Saugvorrichtung 14 und die Schnittstrecker-Vorrichtung 19 sind als Baueinheit um die Schwenkachse C des Schwenklagers 26 schwenkbar. Der Benutzer kann diese Schwenkbewegung ausführen, indem er die genannte Baueinheit an dem Griffteil 34 erfasst und um die Schwenkachse C in die in Figur 2 dargestellte Stellung schwenkt. In dieser Stellung liegt die Klinge vollständig frei und kann in einfacher Weise gereinigt werden. Die aus der Saugvorrichtung 14 und der Schnittstrecker-Vorrichtung 19 gebildete Baueinheit kann von dem Lagerteil 32 gelöst werden, indem das Rohrteil 29 aus der Aufnahme in Längsrichtung, d.h. senkrechte Zeichenebene, herausgezogen wird. Die somit vollständig gelöste und unabhängige Baueinheit kann dann in einfacher Weise gereinigt und nach der Reinigung entsprechend wieder eingesetzt werden.

## Patentansprüche

1. Mikrotom mit einem Klingenhalter (11), an dem eine Klinge (12) gelagert ist, einer Schnittstrecker-Vorrichtung (19), mittels der ein mittels der Klinge (12) erzeugtes Schnittpräparat (P) abstützbar ist, und einer Saugvorrichtung (14), mittels der das Schnittpräparat (P) ansaugbar und abführbar ist, wobei die Saugvorrichtung (14) eine Düse (15) mit einem verstellbar gelagerten Düsenkörper (16) und einem Saugkanal (17) aufweist, **dadurch gekennzeichnet, dass** die Schnittstrecker-Vorrichtung (19) an dem Düsenkörper (16) gelagert und zusammen mit diesem verstellbar ist.

2. Mikrotom nach Anspruch 1, **dadurch gekennzeichnet, dass** der Düsenkörper (16) an einem Schwenklager (26) schwenkbar gelagert ist.

3. Mikrotom nach Anspruch 2, **dadurch gekennzeichnet, dass** der Saugkanal (17) durch das Schwenklager (26) verläuft.

4. Mikrotom nach Anspruch 2 oder 3, **dadurch gekennzeichnet, dass** das Schwenklager (26) eine Aufnahme (27) und ein in die Aufnahme (27) drehbar eingesetztes Rohrteil (29) aufweist.

5. Mikrotom nach Anspruch 4, **dadurch gekennzeichnet, dass** der Düsenkörper (16) an dem Rohrteil (29) gehalten ist.

6. Mikrotom nach einem der Ansprüche 1 bis 5, **dadurch gekennzeichnet, dass** ein Abschnitt des Saugkanals (17) in dem Düsenkörper (16) ausgebildet ist und mit einem Innenraum (28) des Rohrteils (29) in strömungstechnischer Verbindung steht.

7. Mikrotom nach einem der Ansprüche 4 bis 6, **dadurch gekennzeichnet, dass** das Rohrteil (29) aus der Aufnahme (27) entnehmbar ist.

8. Mikrotom nach einem der Ansprüche 1 bis 7, **dadurch gekennzeichnet, dass** die Schnittstrecker-Vorrichtung (19) auf der der Klinge (12) abgewandten Seite des Düsenkörpers (16) angeordnet ist.

9. Mikrotom nach einem der Ansprüche 1 bis 8, **dadurch gekennzeichnet, dass** an der Schnittstrecker-Vorrichtung (19) ein verstellbarer Fingerschutz (30) gelagert ist.

10. Mikrotom nach Anspruch 9, **dadurch gekennzeichnet, dass** der Fingerschutz (30) von einem schwenkbaren Bügel (31) gebildet ist.

11. Mikrotom nach Anspruch 9 oder 10, **dadurch gekennzeichnet, dass** der Fingerschutz (30) ein Griffteil (34) aufweist.

## Claims

1. Microtome, comprising a blade holder (11) on which a blade (12) is mounted, an anti-roll device (19) for supporting a section preparation (P) that has been produced by means of the blade (12), and a suction device (14) by means of which the section preparation (P) can be picked up by suction and carried off, wherein the suction device (14) has a nozzle (15) with an adjustably mounted nozzle body (16) and with a suction channel (17), **characterized in that** the anti-roll device (19) is mounted on the nozzle body (16) and is adjustable together therewith.

2. Microtome according to Claim 1, **characterized in that** the nozzle body (16) is mounted pivotably on a pivot bearing (26).

3. Microtome according to Claim 2, **characterized in that** the suction channel (17) extends through the pivot bearing (26).

4. Microtome according to Claim 2 or 3, **characterized in that** the pivot bearing (26) has a recess (27) and a tube part (29) inserted rotatably into the recess (27).

5. Microtome according to Claim 4, **characterized in that** the nozzle body (16) is held on the tube part (29).

6. Microtome according to one of Claims 1 to 5, **characterized in that** a portion of the suction channel (17) is formed in the nozzle body (16) and is in flow communication with an interior (28) of the tube part (29).

7. Microtome according to one of Claims 4 to 6, **characterized in that** the tube part (29) is removable from the recess (27).

8. Microtome according to one of Claims 1 to 7, **characterized in that** the anti-roll device (19) is arranged on that side of the nozzle body (16) directed away from the blade (12).

9. Microtome according to one of Claims 1 to 8, **characterized in that** an adjustable finger guard (30) is mounted on the anti-roll device (19).

10. Microtome according to Claim 9, **characterized in that** the finger guard (30) is formed by a pivotable bow (31).

11. Microtome according to Claim 9 or 10, **characterized in that** the finger guard (30) has a grip part (34).

## Revendications

1. Microtome avec un porte-lames (11) au niveau duquel une lame (12) est disposée, avec un dispositif d'extension de tranche (19) à l'aide duquel une préparation de tranche (P) produite à l'aide de la lame (12) peut être maintenue et avec un dispositif d'aspiration (14) à l'aide duquel la préparation de tranche (P) peut être aspirée et évacuée, le dispositif d'aspiration (14) comportant une buse (15) avec un corps de buse (16) disposé de façon mobile et un canal d'aspiration (17), **caractérisé en ce que** le dispositif d'extension de tranche (19) est disposé au niveau du corps de buse (16) et peut être déplacé conjointement avec lui.

2. Microtome selon la revendication 1, **caractérisé en ce que** le corps de buse (16) est disposé de façon à pouvoir pivoter au niveau d'un palier pivotant (26).

3. Microtome selon la revendication 2, **caractérisé en ce que** le canal d'aspiration (17) s'étend à travers le palier pivotant (26).

4. Microtome selon la revendication 2 ou 3, **caractérisé en ce que** le palier pivotant (26) comporte un logement (27) et une partie tubulaire (29) enfoncée dans le logement (27) de façon à pouvoir pivoter.

5. Microtome selon la revendication 4, **caractérisé en ce que** le corps de buse (16) est maintenu au niveau de la partie tubulaire (29).

6. Microtome selon l'une quelconque des revendications 1 à 5, **caractérisé en ce qu'**une section du canal d'aspiration (17) est réalisée dans le corps de buse (16) et reliée à un espace intérieur (28) de la partie tubulaire (29) par l'intermédiaire d'une technique d'écoulement.

7. Microtome selon l'une quelconque des revendications 4 à 6, **caractérisé en ce que** la partie tubulaire (29) peut être retirée du logement (27).

8. Microtome selon l'une quelconque des revendications 1 à 7, **caractérisé en ce que** le dispositif d'extension de tranche (19) est disposé sur le côté du corps de buse (16) opposé à la lame (12).

9. Microtome selon l'une quelconque des revendications 1 à 8, **caractérisé en ce qu'**un protège-doigts (30) mobile est disposé au niveau du dispositif d'extension de tranche (19).

10. Microtome selon la revendication 9, **caractérisé en ce que** le protège-doigts (30) est formé par un étrier (31) pouvant pivoter.

11. Microtome selon la revendication 9 ou 10, **caractérisé en ce que** le protège-doigts (30) comporte une partie de poignée (34).
